(19) Europäisches Patentamt

European Patent Office

Office européen des brevets

(11) Veröffentlichungsnummer: **0 226 927 B1**

(12) **EUROPÄISCHE PATENTSCHRIFT** ·

(45) Veröffentlichungstag der Patentschrift: **29.05.91**

(51) Int. Cl.⁵: **G01P 3/36**

(21) Anmeldenummer: **86117046.2**

(22) Anmeldetag: **08.12.86**

(54) **Einrichtung zur berührungslosen Geschwindigkeitsmessung.**

(30) Priorität: **09.12.85 DE 3543785**

(43) Veröffentlichungstag der Anmeldung:
**01.07.87 Patentblatt 87/27**

(45) Bekanntmachung des Hinweises auf die
Patenterteilung:
**29.05.91 Patentblatt 91/22**

(84) Benannte Vertragsstaaten:
**AT BE CH DE FR GB LI**

(56) Entgegenhaltungen:
**EP-A- 0 048 983**
**EP-A- 0 101 536**
**US-A- 3 628 034**

(73) Patentinhaber: **Siemens Aktiengesellschaft**
**Wittelsbacherplatz 2**
**W-8000 München 2(DE)**

(72) Erfinder: **Marguerre, Hans-Helmut, Dipl.-Phys.**
**Mähfeldstrasse 23**
**W-7541 Straubenhardt 4(DE)**

**Beschreibung**

Die Erfindung betrifft eine Einrichtung zur berührungslosen Geschwindigkeitsmessung eines eine optische Struktur aufweisenden, bewegten Objektes mit einem Objektiv, welches das Objekt auf ein Gitter mit mehreren parallel zueinander und quer zur Bewegungsrichtung des Objektes verlaufenden Schlitzen abbildet, und mit einem dem Gitter zugeordneten Lichtsammler, dem mindestens ein ein elektrisches Signal abgebender Fotoempfänger zugeordnet ist.

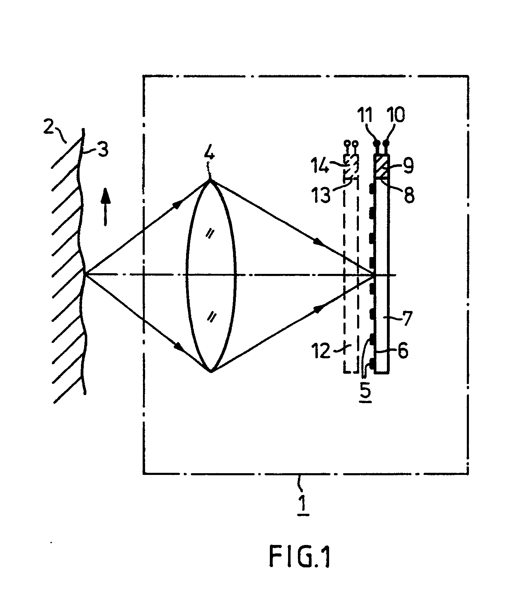

Eine derartige Einrichtung ist aus der Zeitschrift "Leitz-Mitteilungen, Wissenschaft und Technik", 1976, Nr. 7, Seite 249 bis 257, insbesondere Abbildung 1 bekannt. Bei der bekannten Einrichtung ist ein eine optische Struktur aufweisendes Objekt, dessen Geschwindigkeit berührungslos gemessen werden soll, über ein Objektiv auf ein Gitter abgebildet, bei dem es sich um ein Amplitudengitter handelt. Das Amplitudengitter weist mehrere quer zur Bewegungsrichtung des Objektes und parallel zueinander verlaufende Schlitze auf. Ein in Strahlenrichtung hinter dem Amplitudengitter liegender Lichtsammler in Form einer Feldlinse sammelt durch die Schlitze des Amplitudengitters hindurchtretendes Licht auf einem Fotoempfänger. Bei der Vorbeibewegung des Objektes an der bekannten Einrichtung tritt an dem Fotoempfänger ein moduliertes elektrisches Signal auf. Dieses Signal weist einen niederfrequenten Anteil auf, dem ein hochfrequenter Anteil überlagert ist. Die Frequenz des hochfrequenten Anteils stellt eine der Objektgeschwindigkeit proportionale Meßgröße dar.

Der Erfindung liegt die Aufgabe zugrunde, den Aufbau einer Einrichtung der eingangs genannten Art zu vereinfachen.

Zur Lösung dieser Aufgabe ist bei einer Einrichtung der eingangs genannten Art erfindungsgemäß als Lichtsammler eine Fluoreszenzplatte vorgesehen, auf deren einer Oberseite das Gitter angeordnet ist; und der Fotoempfänger ist mit einer Seitenfläche der Fluoreszenzplatte optisch gekoppelt.

Unter einer Fluoreszenzplatte ist dabei ein plattenförmiger fluoreszierende Moleküle enthaltender Lichtkonzentrator zu verstehen, wie er beispielsweise aus der DE-OS 26 20 115 bekannt ist. Ein Teil des auf die Fluoreszenzplatte auftreffenden Lichts regt fluoreszierende Moleküle zur Fluoreszenz an. Der restliche Teil des Lichts tritt durch die Fluoreszenzplatte hindurch. Das Fluoreszenzlicht wird in der Fluoreszenzplatte zu den Seitenflächen hin durch Totalreflexion übertragen.

Aus der DE-OS 26 20 115 geht ferner hervor, daß das übertragene Fluoreszenzlicht an zumindest einer Seitenfläche der Fluoreszenzplatte mittels dort angeordneter Fotoempfänger in Form von Solarzellen erfaßt wird, jedoch wird hier die Lichtenergie des Fluoreszenzlichtes in elektrische Energie umgewandelt, um Anzeigesysteme beleuchten zu können.

Eine Einrichtung gemäß der Erfindung ist relativ einfach aufgebaut, weil bei ihr im Vergleich zu der bekannten Einrichtung das Gitter und der Lichtsammler in einem Bauteil integriert sind, nämlich der das Gitter tragenden Fluoreszenzplatte. Die Verwendung der Fluoreszenzplatte hat den weiteren Vorteil, daß eine einfache optische Kopplung mit dem Fotoempfänger ohne komplizierte Justierungen möglich ist.

Eine besonders einfache optische Kopplung erhält man, wenn der Fotoempfänger unmittelbar an einer Seitenfläche der Fluoreszenzplatte angebracht ist. Der Aufbau der gesamten Einrichtung ist dann sehr kompakt, weil der Fotoempfänger in der gleichen Ebene wie die Fluoreszenzplatte liegt.

Eine weitere vorteilhafte Ausgestaltung der erfindungsgemäßen Einrichtung liegt vor, wenn an der Seitenfläche der Fluoreszenzplatte mit seinem einen Ende ein Lichtleiter anliegt, an dessen anderem Ende der Fotoempfänger angebracht ist. Diese Einrichtung ist durch besondere Störsicherheit ausgezeichnet, weil wegen der Vermeidung elektrischer Anschlußleitungen elektrische oder magnetische Störfelder keinen Einfluß auf das übertragene Signal haben.

Bei einer weiteren vorteilhaften Ausgestaltung der erfindungsgemäßen Einrichtung ist zwischen dem Objektiv und der Fluoreszenzplatte mit dem Gitter eine weitere Fluoreszenzplatte parallel zu jener Fluoreszenzplatte angeordnet, und ein weiterer Fotoempfänger ist mit einer Seitenfläche der weiteren Fluoreszenzplatte optisch gekoppelt. Mit dieser Einrichtung kann auf einfachem Wege der hochfrequente Signalanteil des elektrischen Signals am Ausgang des Fotoempfängers vom niederfrequenten Signalanteil abgetrennt werden. Die weitere Fluoreszenzplatte mit dem weiteren Fotoempfänger dient nämlich zur Erfassung des insgesamt auf das Gitter auftreffenden Lichtes, so daß der weitere Fotoempfänger ein elektrisches Signal liefert, das dem niederfrequenten Signalanteil im elektrischen Signal des ersten Fotoempfängers proportional ist; nach entsprechender Verstärkung des Signals des ersten Fotoempfängers kann dann in einem Differenzverstärker aus den Signalen beider Fotoempfänger das allein interessierende hochfrequente Signal gewonnen werden.

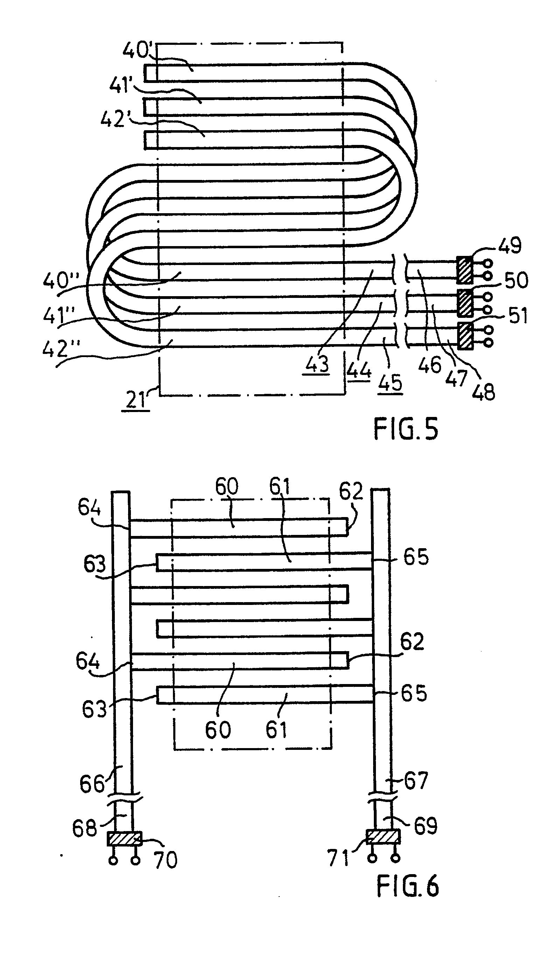

Es ist zwar in der eingangs genannten Literaturstelle (vergl. Abbildung 5) eine Einrichtung zur berührungslosen Geschwindigkeitsmessung beschrieben, bei der durch ein Prismengitter hindurchtretendes Licht von einer Feldlinse auf zwei Fotoempfänger gesammelt wird, deren elektrische Signale den gleichen niederfrequenten Anteil aufweisen, während die hochfrequenten Signale eine Phasenverschiebung von 180° zeigen, so daß durch Addition der beiden elektrischen Signale in einem Differenzverstärker das allein interessierende hochfrequente Signal gewonnen werden kann, jedoch ist hier ein aufwendiges Prismengitter sowie eine optische Justierung von zwei Fotoempfängern erforderlich.

Bei einer weiteren Ausführungsform der Erfindung ist zur Lösung der oben aufgeführten Aufgabe bei einer Einrichtung der eingangs genannten Art erfindungsgemäß vorgesehen, daß das Gitter und der Lichtsammler aus einer Anordnung mehrerer Fluoreszenzlichtleiterabschnitte gebildet ist, die am Orte der Schlitze angeordnet sind; mindestens ein Fotoempfänger ist mit den Fluoreszenzlichtleiterabschnitten optisch gekoppelt.

Unter einem Fluoreszenzlichtleiter ist dabei ein Lichtleiter zu verstehen, der fluoreszierende Substanzen enthält, wie er aus der Zeitschrift "Applied Optics", Februar 1981, Ausgabe 20, Nr. 4, Seite 701 bekannt ist. Auf den Fluoreszenzlichtleiter fallendes Licht regt die fluoreszierenden Substanzen im Lichtleiter zur Abgabe von Fluoreszenzlicht an. Das Fluoreszenzlicht wird im Innern des Lichtleiters durch Totalreflexion zu dessen Enden geleitet.

Der Aufbau der erfindungsgemäßen Einrichtung ist gegenüber der eingangs beschriebenen bekannten Einrichtung vereinfacht, weil die Anordnung der Fluoreszenzlichtleiterabschnitte zugleich die Funktion des Lichtsammlers und die Funktion des Gitters übernimmt.

Ferner ist die gesamte Einrichtung in Strahlenrichtung räumlich kompakter als die bekannte Einrichtung aufgebaut, da keine in Strahlenrichtung hinter dem Gitter liegende Feldlinse benötigt wird. Zusätzlich ist die Herstellung der erfindungsgemäßen Einrichtung vereinfacht, da wegen Vermeidung der Feldlinse die optische Justierung vereinfacht ist.

Eine vorteilhafte Ausgestaltung der Erfindung, die sich durch ihre einfache Herstellung auszeichnet, liegt vor, wenn die Fluoreszenzlichtleiterabschnitte Bestandteile eines Fluoreszenzlichtleiters sind, an dessen einem Ende ein Fotoempfänger angebracht ist. Dabei ist eine einfache optische Kopplung der das Gitter bildenden Fluoreszenzlichtleiterabschnitte mit dem Fotoempfänger durch den Fluoreszenzlichtleiter selbst gegeben. Weiterhin zeichnet sich diese Einrichtung wie auch die nachfolgend beschriebenen Weiterbildungen dieser Einrichtung durch besondere Störsicherheit gegenüber elektrischen und magnetischen Feldern aus, weil wegen der Kopplung des Fotoempfängers über den Fluoreszenzlichtleiter elektrische und magnetischen Felder keinen Einfluß auf die Signalübertragung haben.

Bei einer Weiterbildung dieser erfindungsgemäßen Einrichtung liegt zwischen jeweils zwei benachbarten Fluoreszenzlichtleiterabschnitten eines Fluoreszenzlichtleiters jeweils ein Fluoreszenzlichtleiterabschnitt mindestens eines weiteren Fluoreszenzlichtleiters und an einem Ende des mindestens einen weiteren Fluoreszenzlichtleiters ist ein Fotoempfänger angebracht. Enthält die Einrichtung nur einen weiteren Fluoreszenzlichtleiter, so liefern die Fotoempfänger des einen und des weiteren Fluoreszenzlichtleiters bei Bewegung des Objektes elektrische Signale, deren hochfrequente Anteile eine Phasenverschiebung von 180° haben. Wie schon erwähnt, kann dann durch Addition der elektrischen Signale beider Fotoempfänger in einem Differenzverstärker das allein interessierende hochfrequente Signal, dessen Frequenz proportional der Geschwindigkeit des Objekts ist, in einfacher Weise gewonnen werden. Liegt zwischen benachbarten Fluoreszenzlichtleiterabschnitten des einen Fluoreszenzlichtleiters jeweils ein Fluoreszenzlichtleiterabschnitt von zwei weiteren Fluoreszenzlichtleitern, werden in der Einrichtung also drei Fluoreszenzlichtleiter verwendet, so sind die hochfrequenten Signalanteile der drei Fotoempfänger gegeneinander um 120° phasenverschoben. Mit einer geeigneten Einrichtung kann dann aus der Phasenfolge der drei hochfrequenten Signalanteile zusätzlich die Bewegungsrichtung des Objekts ermittelt werden.

Die Fluoreszenzlichtleiterabschnitte können z. B. Bestandteile von spiralförmig verlaufenden Fluoreszenzlichtleitern sein, jedoch wird es als vorteilhaft angesehen, daß die Fluoreszenzlichtleiter unter Bildung der Fluoreszenzlichtleiterabschnitte mäanderförmig verlaufen.

Bei einer weiteren vorteilhaften Ausgestaltung der erfindungsgemäßen Einrichtung sind die Fluoreszenzlichtleiterabschnitte einzelne Lichtleiterstücke, die mit einer Stirnseite seitlich an einem zusätzlichen Fluoreszenzlichtleiter liegen, an dessen einem Ende ein Fotoempfänger angebracht ist. Bei einer Weiterbildung dieser Einrichtung ist vorgesehen, daß zwischen jeweils zwei benachbarten, an dem zusätzlichen Fluoreszenzlichtleiter anliegenden Lichtleiterstücken jeweils mindestens ein weiteres Fluoreszenzlichtleiterstück liegt, das mit einer Stirnseite seitlich an jeweils einem verbindenden Fluoreszenzlichtleiter anliegt, und daß an einem Ende jedes verbindenden Fluoreszenzlichtleiters ein Fotoempfänger angebracht ist. Es ist dann zweckmäßig, jeweils die Stirnseite der Fluoreszenzlichtleiterstücke, die von dem zusätzlichen Fluoreszenzlichtleiter bzw. dem verbindenden Fluoreszenzlichtleiter abgewandt ist, zu verspiegeln.

Im folgendem ist die Erfindung anhand von in den Figuren 1 bis 6 der Zeichnung dargestellten Ausführungsbeispielen näher erläutert.

Figur 1 zeigt in schematischer Darstellung eine Einrichtung zur berührungslosen Geschwindigkeitsmessung eines Objekts gemäß der Erfindung bei der als Lichtsammler eine Fluoreszenzplatte verwendet ist.

Figur 2 zeigt in schematischer Darstellung eine weitere Ausführungsform gemäß der Erfindung, bei der als Gitter und Lichtsammler eine Anordnung von mehreren Fluoreszenzlichtleiterabschnitten verwendet ist.

Figur 3 bis Figur 6 zeigen Ansichten auf verschiedene Anordnungen von Fluoreszenzlichtleiterabschnitten einer Einrichtung gemäß der Erfindung nach Figur 2.

Die Figur 1 zeigt in schematischer Darstellung eine Einrichtung 1 zur berührungslosen Geschwindigkeitsmessung eines Objektes 2, das nur mit einem Teil seiner Oberfläche 3 gezeigt ist. Die Oberfläche 3 des Objektes 2, das sich in Richtung des dargestellten Pfeiles bewegt, weist eine optische Struktur auf, worunter zu verstehen ist, daß die Oberfläche Punkte bzw. Bereiche mit unterschiedlicher Lichtabstrahlung besitzt. Die bei der Bewegung des Objektes 2 der Einrichtung 1 jeweils gegenüberliegenden Bereiche der Oberfläche 3 werden mittels eines Objektivs 4 auf ein in der Bildebene des Objektivs 4 liegendes Gitter 5 abgebildet. Das Gitter 5 ist auf der Oberseite 6 einer Fluoreszenzplatte 7 angeordnet. An einer Seitenfläche 8 der Fluoreszenzplatte 7 ist ein Fotoempfänger 9 angebracht, an dessen elektrischen Anschlüssen 10 und 11 ein elektrisches Signal abgreifbar ist.

Wie es strichliert dargestellt ist, kann zwischen dem Objektiv 4 und dem Gitter 5 eine weitere Fluoreszenzplatte 12 parallel zur Fluoreszenzplatte 7 angeordnet sein. An einer Seitenfläche 13 der weiteren Fluoreszenzplatte 12 ist ein weiterer Fotoempfänger 14 angeordnet.

Im folgenden ist die Funktionsweise der Einrichtung 1 erläutert. Von der Oberfläche 3 des Objekts 2 ausgehendes Licht wird vom Objektiv 4 auf das Gitter 5 abgebildet. Das durch das Gitter hindurchtretende Licht regt in der Fluoreszenzplatte 7 Fluoreszenzmoleküle zur Abgabe von Fluoreszenzlicht an. Dieses Fluoreszenzlicht wird in der Fluoreszenzplatte 7 durch Totalreflexion zur Seitenfläche 8 geleitet. An dem Fotoempfänger 9 entsteht ein elektrisches Signal, das dem durch das Gitter 5 hindurchtretenden Lichtstrom proportional ist. Bei Bewegung der Oberfläche 3 wird das durch das Gitter 5 hindurchtretende Licht moduliert. Der Fotodetektor 9 liefert ein entsprechendes moduliertes Signal, das einen niederfrequenten und einen hochfrequenten Anteil aufweist.

Der hochfrequente Anteil ist der Geschwindigkeit des Objekts 2 proportional; dieser Anteil kann mittels einer nicht dargestellten Filteranordnung gewonnen werden.

Mit der weiteren Fluoreszenzplatte 12 und dem weiteren Fotodetektor 14 ist das aus dem Objektiv austretende Licht bestimmbar. Der Fotoempfänger 14 liefert demzufolge ein Signal, das dem eintretenden Licht entspricht und eine Frequenz aufweist, die der des niederfrequenten Anteils im Ausgangssignal des einen Fotoempfänger 9 entspricht, jedoch einen höheren Wert aufweist. Nach Verstärkung des Signals des einen Fotoempfängers 9 kann dieses verstärkte Signal in einem Differenzverstärker mit dem Signal des weiteren Fotoemfängers 14 verglichen werden. Am Ausgang des Differenzverstärkers tritt dann der hochfrequente Anteil des elektrischen Signals des Fotoempfängers 9 auf; dieser Anteil ist der Geschwindigkeit des Objekts 2 proportional.

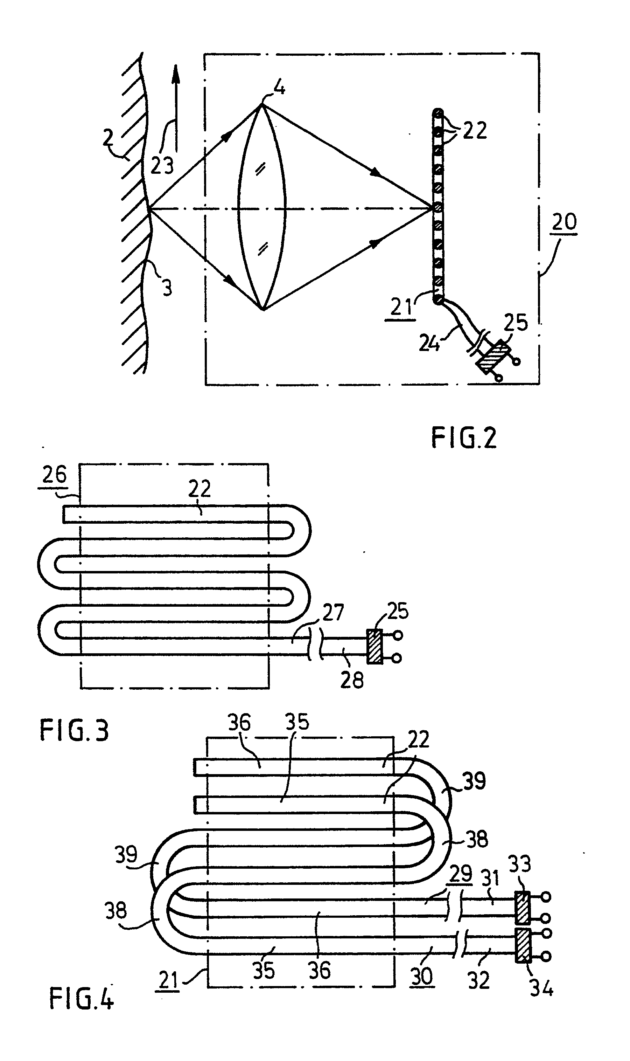

Figur 2 zeigt in schematischer Darstellung ein weiteres Ausführungsbeispiel der erfindungsgemäßen Einrichtung 20 zur berührungslosen Geschwindigkeitsmessung eines Objektes 2, das nur mit einem Teil seiner Oberfläche 3 dargestellt ist. Die Oberfläche 3 weist eine optische Struktur auf, worunter zu verstehen ist, daß die Oberfläche Punkte bzw. Bereiche mit unterschiedlicher Lichtabstrahlung besitzt. Die bei der Bewegung des Objektes 2 der Einrichtung 20 jeweils gegenüber liegenden Bereiche der Oberfläche 3 werden mittels eines Objektivs 4 auf eine Anordnung 21 von im Schnitt dargestellten Fluoreszenzlichtleiterabschnitten 22 abgebildet. Die Fluoreszenzlichtleiterabschnitte 22 verlaufen parallel zueinander und quer zur Bewegungsrichtung 23 des Objekts 2. Sie sind in einer aus Figur 2 nicht ersichtlichen Weise über eine Lichtleiter-Einrichtung 24 mit einem Fotoempfänger 25 optisch gekoppelt, der ein elektrisches Signal abgibt, das dem von den Fluoreszenzlichtleiterabschnitten 22 aufgenommenen Licht entspricht. Die Fluoreszenzlichtleiterabschnitte 22 bilden mit ihren Zwischenräumen ein Gitter wie bei der aus der eingangs genannten Literaturstelle bekannten Einrichtung, indem sie am Orte der Schlitze liegen, während die Zwischenräume gewissermaßen die Gitterstäbe bilden.

Figur 3 zeigt eine Anordnung 26 von Fluoreszenzlichtleiterabschnitten 22, die Bestandteile eines einzigen mäanderförmig verlaufenden Fluoreszenzlichtleiters 27 sind, an dessen einem Ende 28 der Fotoempfänger 25 angebracht ist. Bei dieser Ausführungsform sind also die Fluoreszenzlichtleiterabschnitte 22 durch die geradlinig verlaufenden Bereiche des Fluoreszenzlichtleiters 27 gebildet.

In Figur 4 ist eine Ansicht einer weiteren Ausführungsform der Anordnung 21 nach Figur 2 dargestellt, bei der die Fluoreszenzlichtleiterabschnitte Bestandteile von zwei mäanderförmig verlaufenden Fluoreszenzlichtleitern 29 und 30 sind, an deren einem Ende 31 bzw.32 jeweils ein Fotoempfänger 33 bzw. 34 angebracht ist. Der eine Fluoreszenzlichtleiter 29 ist bezüglich des weiteren Fluoreszenzlichtleiters 30 so angeordnet, daß der weitere Fluoreszenzlichtleiter 30 in seinem geradlinigen Bereich (Abschnitt 35) in der Mitte zwischen den geradlinigen Fluoreszenzlichtleiterabschnitten 36 des einen Fluoreszenzlichtleiters 29 verläuft, wobei die Bereiche 36 des einen Fluoreszenzlichtleiters 29 und geradlinig verlaufenden Bereiche 37 des weiteren Fluoreszenzlichtleiters 30 in einer Ebene liegen und gekrümmte Bereiche 38 des weiteren Fluoreszenzlichtleiters 30 gekrümmte Bereiche 39 des einen Fluoreszenzlichtleiters 29 teilweise überdecken.

Bei der in Figur 5 dargestellten Ausführung der Anordnung 21 nach Figur 2 sind Fluoreszenzlichtleiterabschnitte 40', 41', 42' sowie 40″, 41″, 42″ Bestandteile von jeweils mäanderförmig verlaufenden Fluoreszenzlichtleitern 43, 44, 45. An einem Ende 46, 47, 48 der Fluoreszenzlichtleiter 43, 44, 45 ist jeweils ein Fotoempfänger 49, 50 und 51 angebracht.

Im folgenden sei die Wirkungsweise einer Einrichtung nach Figur 2, die eine Anordnung 21 von Fluoreszenzlichtleiterabschnitten nach den Figuren 3, 4 oder 5 enthält, beschrieben. Von der Oberfläche 3 des Objektes 2 ausgehendes Licht wird vom Objektiv 4 auf die Anordnung 21 abgebildet. Das auf die Anordnung 21 auftreffende Licht regt die fluoreszierenden Substanzen in den Fluoreszenzlichtleiterabschnitten 22 zur Fluoreszenz an. Durch Totalreflexion in den Fluoreszenzlichtleitern 27 bzw. 29 und 30 bzw. 43, 44 und 45 gelangt das Fluoreszenzlicht zu den Fotoempfängern 25 bzw. 33 und 34 bzw. 49, 50 und 51. Als Folge entstehen an ihnen elektrische Signale. Bei Bewegung des Objekts 2 wird aufgrund von Bereichen der Oberfläche 3 mit unterschiedlicher Lichtabstrahlung das Fluoreszenzlicht in den Fluoreszenzlichtleiterabschnitten moduliert. An den Fotoempfängern 25 bzw. 33 und 34 bzw. 49, 50 und 51 entstehen elektrische Signale mit hochfrequenten Anteilen, deren Frequenz der Geschwindigkeit des bewegten Objekts proportional ist.

Bei der Einrichtung 20 nach Figur 2 mit einer Anordnung 21 nach Figur 4 treten an den beiden Fotoempfängern 33 und 34 elektrische Signale auf, deren hochfrequente Anteile um 180° gegeneinander phasenverschoben sind. Durch Addition der elektrischen Signale der Fotoempfänger 33 und 34 in einem nicht dargestellten Differenzverstärker kann dann der interessierende hochfrequente Anteil einfach gewonnen werden.

Bei einer Einrichtung 20 nach Figur 2 mit einer Anordnung 21 nach Figur 5 sind die hochfrequenten Signalanteile der Fotoempfänger 49, 50 und 51 um 120° gegeneinander phasenverschoben. Aus der Phasenfolge der hochfrequenten Anteile der Signale der Fotoempfänger 49, 50 und 51 kann mittels einer geeigneten Einrichtung auf die Bewegungsrichtung des Objekts 2 geschlossen werden. Die Ermittlung der Geschwindigkeit erfolgt beispielsweise wie bei der Anordnung nach Figur 3.

In der Figur 6 ist eine weitere Anordnung 21 von parallel zueinander verlaufenden Fluoreszenzlichtleiterabschnitten dargestellt. Ein Fluoreszenzlichtleiterabschnitt ist hier durch ein geradlinig verlaufendes einzelnes Fluoreszenzlichtleiterstück 60 bzw. 61 gebildet. An einer Stirnseite 62 bzw. 63 ist jedes Leiterstücks 60 bzw. 61 verspiegelt. Mit der anderen Stirnseite 64 bzw. 65 liegt es seitlich an einem zusätzlichen Fluoreszenzlichtleiter 66 bzw. einen verbindenden Fluoreszenzlichtleiter 67, an deren eine Enden 68 bzw. 69 ein Fotoempfänger 70 bzw. 71 angebracht ist. Die Anordnung 21 nach Figur 6 entspricht in ihrer Wirkungsweise der Anordnung 2 nach Figur 4.

**Ansprüche**

1. Einrichtung zur berührungslosen Geschwindigkeitsmessung eines eine optische Struktur aufweisenden, bewegten Objektes mit einem Objektiv, welches das Objekt auf ein Gitter mit mehreren parallel zueinander und quer zur Bewegungsrichtung des Objektes verlaufenden Schlitzen abbildet, und mit einem dem Gitter zugeordneten Lichtsammler, dem mindestens ein ein elektrisches Signal abgebender Fotoempfänger zugeordnet ist, **dadurch gekennzeichnet**, daß der Lichtsammler eine Fluoreszenzplatte (7) ist, auf deren einer Oberseite (6) das Gitter angeordnet ist, und daß der Fotoempfänger (9) mit einer Seitenfläche (8) der Fluoreszenzplatte optisch gekoppelt ist.

2. Einrichtung nach Anspruch 1, **dadurch gekennzeichnet**, daß der Fotoempfänger (9) unmittelbar an einer Seitenfläche (8) der Fluoreszenzplatte (7) angebracht ist.

3. Einrichtung nach Anspruch 1, **dadurch gekennzeichnet**, daß an einer Seitenfläche der Fluoreszenzplatte mit seinem einen Ende ein Lichtleiter anliegt, an dessen anderem Ende der Fotoempfänger angebracht ist.

4. Einrichtung nach Anspruch 1, **dadurch gekennzeichnet**, daß zwischen dem Objektiv (4) und der Fluoreszenzplatte (7) mit dem Gitter (5) eine weitere Fluoreszenzplatte (12) parallel zu jener Fluoreszenzplatte (7) angeordnet ist und daß ein weiterer Fotoempfänger (14) mit einer Seitenfläche (13) der weiteren Fluoreszenzplatte (12) optisch gekoppelt ist.

5. Einrichtung zur berührungslosen Geschwindigkeitsmessung eines eine optische Struktur aufweisenden, bewegten Objektes mit einem Objektiv, welches das Objekt auf ein Gitter mit mehreren parallel zueinander und quer zur Bewegungsrichtung des Objektes verlaufenden Schlitzen abbildet, und mit einem dem Gitter zugeordneten Lichtsammler, dem mindestens ein ein elektrisches Signal abgebender Fotoempfänger zugeordnet ist, **dadurch gekennzeichnet**, daß das Gitter und der Lichtsammler aus einer Anordnung (21) mehrerer Fluoreszenzlichtleiterabschnitte (22), d.h Abschnitte eines fluoreszierende Substanzen enthaltenden Lichtleiters, gebildet sind, die am Orte der Schlitze angeordnet sind, und daß der mindestens eine Fotoempfänger (25) mit den Fluoreszenzlichtleiterabschnitten (22) optisch gekoppelt ist (Figur 2).

6. Einrichtung nach Anspruch 5, **dadurch gekennzeichnet**, daß die Fluoreszenzlichtleiterabschnitte (22) Bestandteile eines Fluoreszenzlichtleiters (27) sind und daß an einem Ende (28) des Fluoreszenzlichtleiters (27) ein Fotoempfänger (25) angebracht ist.

7. Einrichtung nach Anspruch 6, **dadurch gekennzeichnet**, daß zwischen jeweils zwei benachbarten Fluoreszenzlichtleiterabschnitten (36) eines Fluoreszenzlichtleiters (29) jeweils ein Fluoreszenzlichtleiterabschnitt (37) mindestens eines weiteren Fluoreszenzlichtleiters (30) liegt und daß an einem Ende (32) des mindestens einen weiteren Fluoreszenzlichtleiters (30) ein Fotoempfänger (34) angebracht ist (Figur 4).

8. Einrichtung nach Anspruch 5, **dadurch gekennzeichnet**, daß die Fluoreszenzlichtleiter unter Bildung der Fluoreszenzlichtleiterabschnitte mäanderförmig verlaufen.

9. Einrichtung nach Anspruch 5, **dadurch gekennzeichnet**, daß die Fluoreszenzlichtleiterabschnitte (22) einzelne Lichtleiterstücke (60) sind, die mit einer Stirnseite (64) seitlich an einem zusätzlichen Fluoreszenzlichtleiter (66) anliegen, an dessen einem Ende (68) ein Fotoempfänger (70) angebracht ist.

10. Einrichtung nach Anspruch 9, **dadurch gekennzeichnet**, daß zwischen jeweils zwei benachbarten, an dem zusätzlichen Fluoreszenzlichtleiter (66) anliegenden Lichtleiterstücken (60) jeweils mindestens ein weiteres Fluoreszenzlichtleiterstück (61) liegt, das mit einer Stirnseite (65) seitlich an einem verbindenden Fluoreszenzlichtleiter (67) anliegt und daß an einem Ende (69) des verbindenden Fluoreszenzlichtleiters (67) ein Fotoempfänger (71) angebracht ist.

## Claims

1. Device for contactless speed measurement of a moving object having an optical structure, with a lens system which maps the object onto a grid having several slots running parallel to each other and transversely in relation to the direction of movement of the object, and with a light collector which is coordinated with the grid and with which there is coordinated at least one photoreceiver emitting an electric signal, characterised in that the light collector is a fluorescent plate (7) on the one upper side (6) of which is arranged the grid and in that the photoreceiver (9) is optically coupled with a side face (8) of the fluorescent plate.

2. Device according to claim 1, characterised in that the photoreceiver (9) is provided directly on a side face (8) of the fluorescent plate (7).

3. Device according to claim 1, characterised in that the one end of a light guide rests against a side face of the fluorescent plate, the photoreceiver being provided at the other end of the light guide.

4. Device according to claim 1, characterised in that a further fluorescent plate (12) is arranged between the lens system (4) and the fluorescent plate (7) with the grid (5), parallel to that fluorescent plate (7), and in that a further photoreceiver (14) is optically coupled with a side face (13) of the further fluorescent plate (12).

5. Device for contactless speed measurement of a moving object having an optical structure, with a lens system which maps the object onto a grid having several slots running parallel to each other and transversely in relation to the direction of movement of the object, and with a light collector which is coordinated with the grid and with which there is coordinated at least one photoreceiver emitting an electric signal, characterised in that the grid and the light collector are formed from an arrangement (21) of several fluorescent light guide sections (22), i.e. sections of a light guide containing fluorescent substances, arranged at the location of the slots, and in that the at least one photoreceiver (25) is optically coupled with the fluorescent light guide sections (22) (Figure 2).

6. Device according to claim 5, characterised in that the fluorescent light guide sections (22) are components of a fluorescent light guide (27) and in that a photoreceiver (25) is provided at one end (28) of the fluorescent light guide (27).

7. Device according to claim 6, characterised in that between, in each case, two adjacent fluorescent light guide sections (36) of a fluorescent light guide (29) there lies a respective fluorescent light guide section (37) of at least one further fluorescent light guide (30) and in that a photoreceiver (34) is provided at one end (32) of the at least one further fluorescent light guide (30) (Figure 4).

8. Device according to claim 5, characterised in that the fluorescent light guides run in a meander-shaped manner, forming the fluorescent light guide sections.

9. Device according to claim 5, characterised in that the fluorescent light guide sections (22) are individual light guide pieces (60) which rest with one face (64) laterally against an additional fluorescent light guide (66), at the one end (68) of which there is provided a photoreceiver (70).

10. Device according to claim 9, characterised in that between, in each case, two adjacent light guide pieces (60), resting against the additional fluorescent light guide (66), there lies at least one further respective fluorescent light guide piece (61) which rests with one face (65) laterally against a connecting fluorescent light guide (67) and in that a photoreceiver (71) is provided at one end (69) of the connecting fluorescent light guide (67).

**Revendications**

1. Dispositif pour mesurer sans contact la vitesse d'un objet en déplacement et présentant une structure optique comprenant un objectif qui forme l'image de l'objet sur un réseau ayant plusieurs fentes s'étendant parallèlement les unes aux autres et transversalement à la direction de déplacement de l'objet, et un collecteur de lumière associé au réseau et auquel est associé au moins un photorécepteur émettant un signal électrique, caractérisé en ce que le collecteur de lumière est une plaque fluorescente (7) sur l'une des faces (6) duquel est disposé le réseau et en ce que le photorécepteur (9) est couplé optiquement à une surface latérale (8) de la plaque fluorescente.

2. Dispositif suivant la revendication 1, caractérisé en ce que le photorécepteur (9) est monté directement sur une surface latérale (8) de la plaque fluorescente (7).

3. Dispositif suivant la revendication 1, caractérisé en ce qu'un guide d'ondes de lumière, à l'une des extrémités duquel est monté un photorécepteur, s'applique par son autre extrémité à une surface latérale de la plaque fluorescente.

4. Dispositif suivant la revendication 1, caractérisé en ce qu'entre l'objectif (4) et la plaque fluorescente (7) comportant le réseau (5) est interposée une seconde plaque fluorescente (12) parallèle à la plaque fluorescente mentionnée en premier lieu (7) et en ce qu'un second photorécepteur (14) est couplé optiquement à une surface latérale (13) de la seconde plaque fluorescente (12).

5. Dispositif pour mesurer sans contact la vitesse d'un objet en mouvement et présentant une structure optique, comprenant un objectif qui forme l'image de l'objet sur un réseau à plusieurs fentes qui s'étendent parallèlement les unes aux autres et transversalement à la direction de déplacement de l'objet, et un collecteur de lumière associé au réseau et auquel est associé au moins un photorécepteur émettant un signal électrique, caractérisé en ce que le réseau et le collecteur de lumière sont formés d'un agencement (21) de plusieurs sections de conductrices de lumière fluorescente (22), c'est-à-dire de tronçons d'un guide d'ondes de lumière contenant une substance fluorescente, qui sont disposés à l'emplacement des fentes, et en ce que ledit au moins un photorécepteur (25) est couplé optiquement par les sections conductrices de lumière fluorescente (22) (figure 2).

6. Dispositif suivant la revendication 5, caractérisé en ce que les sections conductrices de lumière fluorescente (22) font partie d'un guide d'ondes de lumière fluorescente (27) et en ce qu'un photorécepteur (25) est monté à l'une des extrémités (28) du guide d'ondes de lumière fluorescente (27).

7. Dispositif suivant la revendication 6, caractérisé en ce qu'entre deux sections de guides d'ondes de lumière fluorescente voisines (36) d'un guide d'ondes de lumière fluorescente (29) est prévue au moins une section d'un guide d'ondes de lumière fluorescente (27) d'au moins un autre guide d'ondes de lumière fluorescente (30) et en ce qu'un photorécepteur (34) est monté à une extrémité (32) ledit au moins un autre guide d'ondes de lumière fluorescente (30) (figure 4).

8.  Dispositif suivant la revendication 5, caractérisé en ce que les guides d'ondes de lumière fluorescente s'étendent en forme de méandre en constituant les sections de guides d'ondes lumière fluorescente.

9.  Dispositif suivant la revendication 5, caractérisé en ce que les sections de guides d'ondes de lumière fluorescente (22) sont des tronçons de guides d'ondes de lumière (60) individuels, qui s'appliquent par un côté frontal (64) latéralement contre un guide d'ondes de lumière fluorescente supplémentaire (66) à l'une des extrémités (68) duquel est monté un photorécepteur (70).

10. Dispositif suivant la revendication 9, caractérisé en ce qu'entre deux tronçons de guides d'ondes de lumière (60) voisins et s'appliquant au guide d'ondes de lumière fluorescente (66) supplémentaire, il est prévu au moins un autre tronçon de guide d'ondes de lumière fluorescente (61), qui s'applique par un côté frontal (65) latéralement contre un guide d'ondes de lumière fluorescente de liaison (67) et en ce qu'un photorécepteur (71) est monté à l'une des extrémités (69) du guide d'ondes de lumière fluorescente de liaison (67).

FIG.1

FIG.2

FIG.3

FIG.4

EP 0 226 927 B1

FIG.5

FIG.6

11